# EUROPÄISCHE PATENTSCHRIFT

(11) **EP 1 343 981 B1**
(45) Veröffentlichungstag und Bekanntmachung des Hinweises auf die Patenterteilung: **04.01.2006**
(21) Anmeldenummer: 01995573.1
(22) Anmeldetag: 07.12.2001
(51) Int. Cl.: F16G 13/18

(54) **STATISCHE GELENKKETTE**
STATIC LINK CHAIN
CHAINE STATIQUE A ARTICULATIONS

(30) Priorität: 18.12.2000 DE 10063149
(43) Veröffentlichungstag der Anmeldung: 17.09.2003
(73) Patentinhaber: HJS Gelenk System GmbH, 81925 München (DE)
(72) Erfinder: Kubein-Meesenburg, Dietmar, 37075 Göttingen (DE); Nägerl, Hans, Dr., 37130 Gleichen (DE); Ihlow, Dankmar, 23730 Sierksdorf (DE)
(74) Vertreter: Scheffler, Jörg
(86) Internationale Anmeldenummer: PCT/DE2001/004577
(87) Internationale Veröffentlichungsnummer: WO 2002/050451

(56) Entgegenhaltungen:
- DE-A- 3 504 824
- FR-A- 2 614 380
- FR-A- 2 698 648
- GB-A- 1 339 018
- US-A- 3 694 021
- US-A- 4 715 638
- US-A- 5 069 948
- US-A- 5 200 679

## Beschreibung

Die Erfindung betrifft eine aus mehreren Kettengliedern bestehende statische Gelenkkette.

Die bekannten Gelenkketten sind ausschließlich in Zugrichtung stabil, so daß deren Verwendungsmöglichkeiten eingeschränkt sind.

Durch die FR 2 614 380 A1 ist bereits eine von kurzen und langen Kettengliedteilen gebildete Gelenkkette bekannt geworden, die als umlaufendes Transportband eingesetzt ist. Hier sind stützende Gleitschienen 24 angeordnet, auf denen die Gelenkkette aufliegt und so in Lastrichtung stabilisiert wird.

Der Erfindung liegt die Aufgabe zugrunde, eine statische Gelenkkette so auszubilden, daß sie, ohne, daß stützende Auflagen erforderlich sind, in der Belastungsebene stabil ist.

Diese Aufgabe wird durch die Merkmale des Anspruchs 1 gelöst. Die weitere Ausgestaltung der Erfindung ist den Unteransprüchen zu entnehmen.

Erfindungsgemäß ist es vorgesehen, daß die Kettenglieder jeweils aus einem kurzen, zugbelasteten Kettengliedteil und einem langen, druckbelasteten Kettengliedteil bestehen, die durch Buchsengelenke miteinander verbunden sind und einander überlappen, wobei in einem Abstand A parallel zu den Buchsengelenken eine auf Zug belastete Spanneinrichtung an den langen Kettengliedteilen befestigt ist, die die Gelenkkette unter Last stabilisiert. Durch die Spanneinrichtung wird erreicht, daß die Gelenkkette unter Lasteinwirkung nicht einknickt, sondern mit stärker werdender Last durch den vorhandenen physikalisch stabilen Zustand immer stabiler und steifer wird.

Der Einsatzbereich der Erfindung kann in vorteilhafter Weise erweitert werde, wenn beidseitig zwei Spanneinrichtungen vorgesehen sind, die bedarfsweise wechselnd belastet werden. Die Gelenkkette ist dann in zwei Belastungsrichtungen stabil.

In weiterer Ausgestaltung kann es vorteilhaft sein, wenn der Abstand (A) zwischen den Buchsengelenken und der Spanneinrichtung veränderbar ist. Die Anordnung der Kettenglieder ist dann bogenförmig verstellbar. Dieser Effekt ist auch erzielbar, sofern die Länge der Spanneinrichtung z. B auch mittels einer Steuervorrichtung veränderbar ist.

Im Rahmen der Erfindung kann es weiterhin vorgesehen sein, daß die Spanneinrichtung von stegförmigen Spanngliedern gebildet ist, die an den langen Kettengliedteilen angelenkt sind. Vorzugsweise sind die stegförmigen Spannglieder im Bereich ihrer Buchsengelenke mit sich in Längsrichtung erstreckenden Langlöchern versehen, die insbesondere auch die wechselnde Belastbarkeit bei der Anordnung von zwei Spanneinrichtungen sicherstellen.

Sofern die stegförmigen Spannglieder in ihrer Länge einstellbar sind, können die Kettenglieder der Gelenkkette exakt definiert verschwenkt werden. Die stegförmigen Spannglieder können alternativ auch im Bereich ihrer Langlöcher zur Längenänderung verschiebbar sein.

In weiterer Ausgestaltung der Erfindung kann es vorgesehen sein, daß die Spanneinrichtung von einem durchlaufenden bandförmigen Spannelement gebildet ist. Auch eine derartige Ausbildung ermöglicht es, die Kettenglieder der Gelenkkette mittels einer Steuereinrichtung zu verschwenken. Die Spanneinrichtung kann im übrigen so angeordnet sein, daß sich eine bogenförmige Anordnung der Kettenglieder ergibt. Dieses ist vorteilhaft, sofern die Gelenkkette beispielsweise als Brücke oder Gewölbe verwendet wird.

Gemäß einer bevorzugten Ausführungsform weisen die langen Kettengliedteile an ihren Enden abgewinkelte Abschnitte auf, in denen die Buchsengelenke für die kurzen Kettengliedteile angeordnet sind. Es ergibt sich so die Möglichkeit, die kurzen Kettengliedteile mittig innerhalb der langen Kettengliedteile anzuordnen, wodurch eine nachteilige einseitige Lagerung der Buchsengelenke vermieden wird.

Gemäß einer bevorzugten Ausführungsform wird die Gelenkkette als Brücke verwendet. Hier ist die Spanneinrichtung vorzugsweise am Innenumfang der Brücke angebracht, wenn diese nach oben gewölbt ist und am Außenumfang, wenn sie nach unten gewölbt ist. Durch diese Anordnung der Spanneinrichtung wird erreicht, daß bei einer Kompression der Brücke unter Lasteinleitung diese nicht einknickt, sondern mit stärker werdender Last immer stabiler und steifer wird. Die Lasteinleitung bedingt eine Bewegung in Richtung Streckstellung und hat eine zunehmende Verfestigung der Brücke zur Folge.

Aufgrund der Aneinanderreihung vorgefertigter Module ist ein flexibler Aufbau bzw. eine Vormontage der Brücke möglich, wobei die Länge und die Wölbung der Brücke auf einfache Weise variiert werden können. Vormontierte Segmente können ggf zusammengeklappt transportiert werden. Im übrigen sind Pylone und Pfeiler primär nicht erforderlich.

im folgenden wird die Erfindung anhand von Ausführungsbeispielen näher erläutert. Es zeigen:
Figur 1, eine Teildarstellung einer Gelenkkette mit zwei beidseitig vorgesehenen Spanneinrichtungen in perspektivischer Darstellung;
Figur 2, eine Teildarstellung einer Gelenkkette mit zwei beidseitig vorgesehenen Spanneinrichtungen, bei der die langen Kettengliedteile U-förmig ausgebildet sind, in vergrößerter Seitendarstellung;
Figur 3, eine Teildarstellung einer Gelenkkette, deren Spanneinrichtung von stegförmigen Spanngliedern gebildet ist;
Figur 4, eine Teildarstellung einer Gelenkkette, deren beidseitige Spanneinrichtung von stegförmigen Spanngliedern gebildet ist.

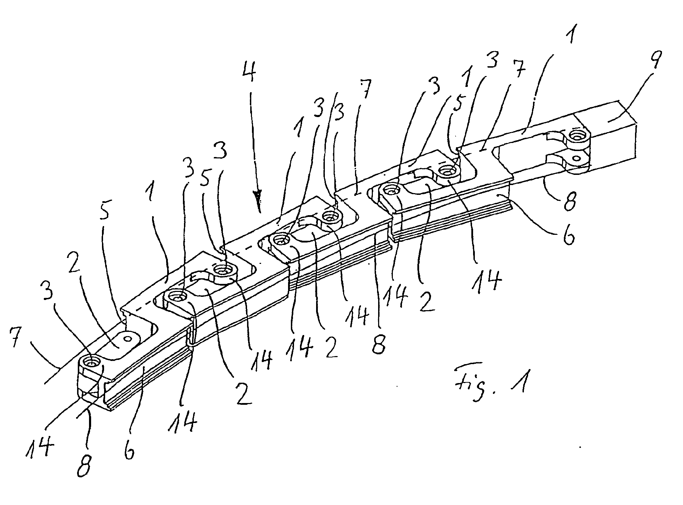

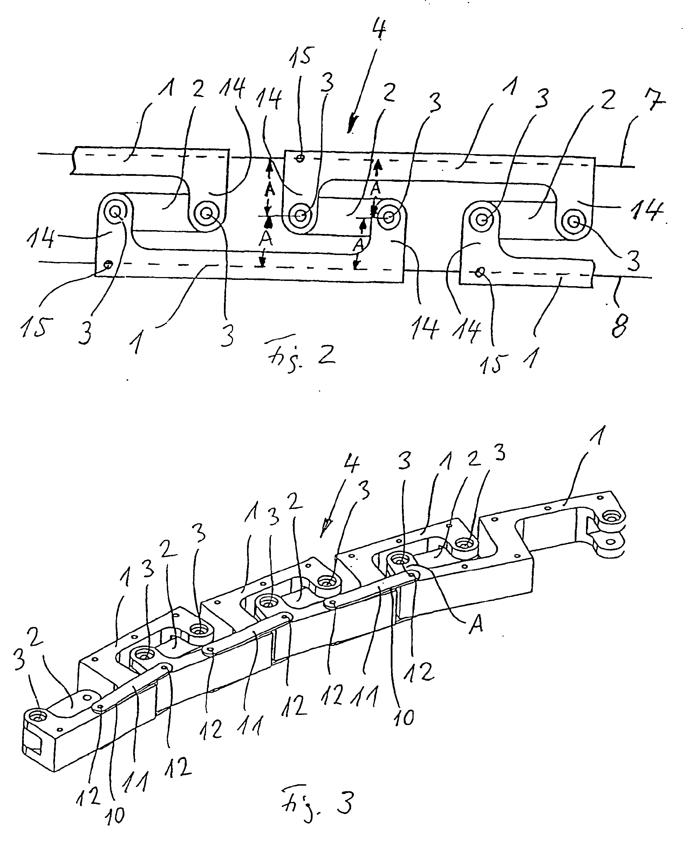

Die Figur 1 zeigt eine statische Gelenkkette 4, die von Kettengliedern gebildet ist, die jeweils aus einem langen druckbelasteten Kettengliedteil 1 und einem kurzen zugbelasteten Kettengliedteil 2 bestehen, die durch Buchsengelenke 3 miteinander verbunden sind und einander überlappen. Die langen Kettengliedteile 1 weisen an ihren Enden abgewinkelte Abschnitte 14 auf, in denen die Buchsengelenke 3 angeordnet sind. An der Oberseite und an der Unterseite der langen Kettengliedteile 1 weisen die langen Kettengliedteile 1 jeweils eine Nut 5 bzw. 6 auf, in der Seile 7 und 8 geführt sind, die beidseitig zwei Spanneinrichtungen 7, 8 bilden. Wie aus der Figur 2 ersichtlich, sind die Seile 7 und 8 der Spanneinrichtungen in einem Abstand A zu den Buchsengelenken 3 angeordnet und in Befestigungen 15 gehalten. Die beidseitig wirksamen Spanneinrichtungen 7 und 8 stabilisieren die Kettenglieder 1, 2 der Gelenkkette 4 unter Last. Sofern die Seile 7 und 8 der Spanneinrichtungen in ihrer Länge veränderbar sind, kann eine exakt definierte Verschwenkbarkeit der Kettenglieder 1, 2 der Gelenkkette 4 erreicht werden. Hierzu ist eine Steuervorrichtung 9 angeordnet. Die Befestigungen 15 der Spanneinrichtungen 7 und 8 sind zur Verstellung der Kettenglieder 1, 2 der Gelenkkette 4 lösbar ausgebildet. Hierzu können z. B. elektrische oder hydraulische Betätigungen bzw. Verriegelungen angeordnet sein.

Die langen Kettengliedteile 1 der Gelenkkette 4 können gemäß dem Ausführungsbeispiel der Figur 2 auch sich überlappend, U-förmig ausgebildet sein.

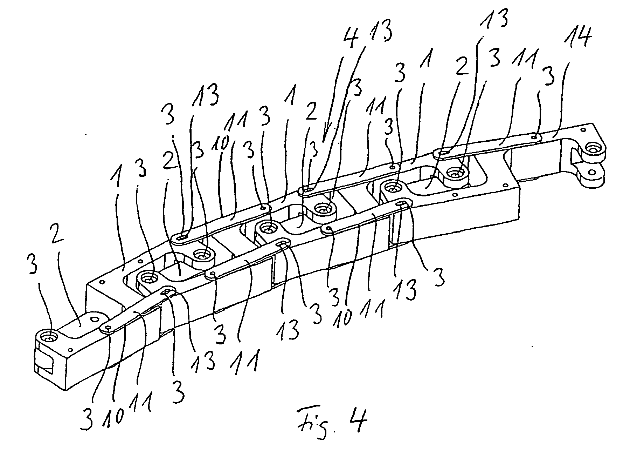

Die Figur 3 zeigt eine Gelenkkette 4; deren Spanneinrichtung 11 von einseitig angeordneten stegförmigen Spanngliedern 10 gebildet ist. Die Spannglieder 10 sind in einem Abstand A zu den Buchsengelenken 3 an den Kettengliedern 1, 2 in Gelenken 12 befestigt, so daß eine Viergelenkmechanik ausgebildet ist. Die unterseitige Spanneinrichtung 11 stabilisiert die Kettenglieder 1, 2 der Gelenkkette 4, wobei ein Bogen, z. B. einer Brücke, mit einer von der Spanneinrichtung 11 vorgegebenen Krümmung ausgebildet ist. Die stegförmigen Spannglieder 10 sind auf Zug beansprucht.

In der Figur 4 ist eine Gelenkkette 4 dargestellt, an deren Kettengliedern 1, 2 beidseitig stegförmige Spannglieder 10 in einem Abstand A beidseitig der Buchsengelenke 3 an den Kettengliedern 1, 2 in Gelenken 12 befestigt sind, die zwei Spanneinrichtungen 11 bilden. Die Spannglieder 10 sind hier im Bereich ihrer Gelenke 12 mit sich in ihrer Längsrichtung erstreckenden Langlöchern 13 versehen. Aus dem sich ergebenden Spiel in den Spanneinrichtungen 11 ergibt sich auch bei wechselnden Lastrichtungen eine Laststabilität der Gelenkkette 4 in ihren beiden Lastrichtungen. Abhängig von der Lastrichtung ist wechselnd eine der beiden Spanneinrichtungen 11 einer die Gelenkkette 4 stabilisierenden Zugbelastung ausgesetzt und die andere Spanneinrichtung 11 entlastet.

Im Ausführungsbeispiel gemäß der Figur 4 ist es möglich, die stegförmigen Spannglieder 10 oder die kurzen, zugbelasteten Kettengliedteile 2 im Bereich ihrer Buchsengelenke 3 mit Langlöchern zu versehen. Hieraus ergibt sich der Vorteil, daß die Gelenkkette 4 verschwenkbar ist. Außerdem ist es möglich, die Bogenform der Kettenglieder 1, 2 zu variieren, indem die Länge der stegförmigen Spannglieder 10 bzw. der kurzen Kettengliedteile 2 gesteuert verändert wird. Diese können z. B. teleskopförmig ausgebildet und hydraulisch betätigbar sein. Auch ist es möglich, die Spannglieder 10 bzw. die kurzen Kettengliedteile 2 mittels im Bereich ihrer Langlöcher durch z. B. einen dort angeordneten Zahntrieb in ihrer wirksamen Länge verstellbar zu gestalten. Auch die Abstände A zwischen den Buchsengelenken 3 der kurzen Kettengliedteile 2 und der Spanneinrichtung 7, 8, 11 können in dieser oder ähnlicher Form verstellbar ausgebildet sein.

In der Praxis gibt es für die erfindungsgemäße Gelenkkette 4 eine Vielzahl von vorteilhaften Einsatzmöglichkeiten, wie beispielsweise als Brücke. Da die Brücke in ihrer Wölbung unterschiedlich eingestellt werden kann, ist es möglich, die Brücke an die Anforderungen einer unterschiedlichen Belastung anzupassen. Da keine Pylone und Pfeiler erforderlich sind, ist auch keine Verankerung von Tragseilen notwendig, und die Auflagelast besteht nur in der Brücke selber. Der Aufbau der Brücke wird durch ein horizontales Zusammenfügen der einzelnen Kettenglieder und ein anschließendes Aufrichten sowie die Stabilisierung durch Lasteinleitung, primär durch das Gewicht der Brücke selber, erreicht. Am Außenumfang der Brücke kann bei nach oben gewölbter, oder am Innenumfang bei nach unten gewölbten Brücken, ein Fahrweg durchlaufend aufliegen. Ferner kann eine in der horizontalen Ebene in einem rechten Winkel zur äußeren bzw. inneren Spanneinrichtung angeordnete weitere Verspannung angeordnet sein, um die Brücke in ihrer Längserstreckung kurvenförmig zu gestalten.

Die erfindungsgemäße Brücke ist sturm-, schwingungs- und erdbebensicher. Insbesondere, wenn die Brücke an ihren Enden nicht oder nur an einem Ende eingespannt ist. Vorzugsweise werden zwei oder mehrere Gelenkketten parallel nebeneinander angeordnet, um die nötige Breite zu erreichen, die beispielsweise für eine Fahrbahn erforderlich ist.

Die erfindungsgemäße Brücke ist reparaturfreundlich. Um beispielsweise eines der Kettenglieder auszuwechseln, können das vorherige und das nachfolgende Kettenglied miteinander verblockt werden, um das auszuwechselnde Kettenglied entfernen zu können. Ferner ist die Spanneinrichtung variabel und ohne aufwendige Hilfskonstruktionen austauschbar.

Die erfindungsgemäße Gelenkkette kann ferner als Gewölbe verwendet werden. Ein derartiges Gewölbe weist die der Brückenkonstruktion entsprechenden Vorteile auf. Insbesondere kann auch das Gewölbe durch Aneinanderreihung vorgefertigter Module flexibel auf- und vorgebaut werden. Die Länge des Gewölbes ist variabel, und durch die Wahl einer entsprechenden Wölbungsstärke kann das Gewölbe für unterschiedlich starke Lastaufnahmen vorgesehen werden. Pfeiler sind nicht erforderlich. Auch ein erfindungsgemäßes Gewölbe ist sturm-, schwingungs- und erdbebensicher. Ferner ist es reparaturfreundlich.

Die Gelenkkette kann auch als Greiffinger von beispielsweise Robotern verwendet werden. Hierzu ist es aber erforderlich, beidseitig der Kettenglieder je eine Spanneinrichtung anzuordnen, die die Krümmung des Greiffingers bestimmt. Mittels einer Steuervorrichtung kann die Länge der Spanneinrichtungen oder der Abstand A der Gelenkketten so geändert werden, daß der Greiffinger definiert gekrümmt wird. Es ist eine Lasteinleitung in Beuge- und Streckrichtung möglich. Die Spanneinrichtungen sind hier so gestaltet, daß sie zugbelastet sind.

Auch eine Verwendung der Gelenkkette als Koppelglied in einer Schubeinheit zwischen einem schiebenden und einem geschobenen Schiff ist möglich. Ein derartiges Koppelglied ermöglicht es, gekoppelte Schiffe als eine Einheit Flußbiegungen anzupassen. Verbunden sind das Schubschiff und das zu schiebende Schiff über eine erfindungsgemäße Gelenkkette. Beidseitig der Kettenglieder ist jeweils eine Spanneinrichtung angebracht. Die Spanneinrichtungen steuern die Krümmung der Gelenkkette, d. h. den Winkel des Schubschiffes und des geschobenen Schiffes zueinander. Hierzu ist eine Steuervorrichtung vorgesehen.

Weiterhin kann es vorteilhaft sein, die Gelenkkette als Bauelement in schwingungsfähigen Systemen zur Übertragung von Schwingungen auf Systemkomponenten, wie auf Rüttler, Prüfstände, Mischer oder ähnliche Aggregate, zu verwenden.

Aufgrund der hohen Eigenstabilität kann zudem insbesondere auch ein Einsatz als Dämpfungselement in Bauwerken vorteilhaft sein. Hier kann eine erfindungsgemäße Gelenkkette 4 z. B. als tragende Säule oder als tragender Balken Verwendung finden.

Die Gelenkkette 4 kann auch als Steuerungssystem in der Medizintechnik für endoskopische Instrumente, z. B. für die Rektoskopie, verwendet werden. Auch ist ein Einsatz als Steuerungssystem in Anlagen für Rohruntersuchungen möglich.

Weiterhin können auf den Kettengliedern 1, 2 einer Brücke Windkraftanlagen, vorzugsweise Flettner-Rotoren, angeordnet werden. Es ist so außer einer Energiegewinnung auch möglich, die Windverhältnisse auf der Fahrbahn zu optimieren und die Schwingungsdämpfung zu steuern. Die Segmente können zum Schutz gegen Witterungseinflüsse gekapselt angeordnet sein.

Der Einsatz ist auch im Rahmen einer Lagerkonstruktion für Pfeiler z. B. einer Magnetschwebebahn möglich, die nicht nur die Last auffängt, sondern auch eine Nachjustierung der Trasse selbst zuläßt.

## Patentansprüche

1. Statische Gelenkkette (4) aus mehreren Kettengliedern (1, 2), bestehend jeweils aus einem kurzen, zugbelasteten Kettengliedteil (2) und einem langen, druckbelasteten Kettengliedteil (1), die durch Buchsengelenke (3) miteinander verbunden sind und einander überlappen, wobei in einem Abstand A parallel zu den Buchsengelenken (3) eine auf Zug belastete Spanneinrichtung (7, 8, 11) an den langen Kettengliedteilen (1) befestigt ist, die die Gelenkkette (4) unter Last stabilisiert.

2. Gelenkkette (4) nach Anspruch 1, **dadurch gekennzeichnet, daß** beidseitig zwei Spanneinrichtungen (7, 8, 11) vorgesehen sind, die bedarfsweise wechselnd belastet werden.

3. Gelenkkette (4) nach wenigstens einem der vorhergehenden Ansprüche, **dadurch gekennzeichnet, daß** der Abstand (A) zwischen den Buchsengelenken (3) und der Spanneinrichtung (7, 8, 11) veränderbar ist, derart, daß die Anordnung der Kettenglieder (1, 2) bogenförmig verstellbar ist.

4. Gelenkkette (4) nach wenigstens einem der vorhergehenden Ansprüche, **dadurch gekennzeichnet, daß** die Spanneinrichtung (11) von stegförmigen Spanngliedern (10) gebildet ist, die an den langen Kettengliedteilen (1) angelenkt sind.

5. Gelenkkette (4) nach Anspruch 4, **dadurch gekennzeichnet, daß** die stegförmigen Spannglieder (10) im Bereich ihrer Buchsengelenke (12) mit sich in Längsrichtung erstreckenden Langlöchern (13) versehen sind.

6. Gelenkkette (4) nach Anspruch 5, **dadurch gekennzeichnet, daß** die stegförmigen Spannglieder (10) in ihrer Länge einstellbar sind.

7. Gelenkkette (4) nach wenigstens einem der vorhergehenden Ansprüche, **dadurch gekennzeichnet, daß** die Spanneinrichtung (7, 8) von einem durchlaufenden bandförmigen Spannelement gebildet ist.

8. Gelenkkette (4) nach wenigstens einem der vorhergehenden Ansprüche, **dadurch gekennzeichnet, daß** die langen Kettengliedteile (1) an ihren Enden abgewinkelte Abschnitte (14) aufweisen, in denen die Buchsengelenke (3) für die kurzen Kettengliedteile (2) angeordnet sind.

## Claims

1. Static link chain (4) made of a plurality of chain links (1, 2), each consisting of a short, tension-loaded chain link part (2) and a long, compression-loaded chain link part (1), which chain link parts are interconnected by bushing joints (3) and overlap each other, a tension-loaded fixing device (7, 8, 11) which stabilises the link chain 94) under load being attached to the long chain link parts (1) at a distance from bushing joints (3), and parallel thereto.

2. Link chain (4) according to claim 1, **characterised in that** two fixing devices (7, 8, 11), which are alternately loaded as required, are provided one on each side.

3. Link chain (4) according to at least one of the preceding claims, **characterised in that** the distance (A) between the bushing joints (3) and the fixing device (7, 8, 11) is variable such that the arrangement of the chain links (1, 2) can be adjusted in an arc.

4. Link chain (4) according to at least one of the preceding claims, **characterised in that** the fixing device (11) is formed by web-shaped fixing members (10) coupled to the long chain link parts (1).

5. Link chain (4) according to claim 4, **characterised in that** the web-shaped fixing members (10) are provided in the region of their bushing joints (12) with slots (13) extending in the longitudinal direction.

6. Link chain (4) according to claim 5, **characterised in that** the web-shaped fixing members (10) are adjustable in length.

7. Link chain (4) according to at least one of the preceding claims, **characterised in that** the fixing device (7, 8) is formed by a continuous, strap-shaped fixing element.

8. Link chain (4) according to at least one of the preceding claims, **characterised in that** the long chain link parts (1) have angled portions (14) at their ends, in which the bushing joints (3) for the short chain link parts (2) are arranged.

## Revendications

1. Chaîne à articulations (4) statique, constituée de plusieurs maillons de chaîne (1, 2), comprenant respectivement un maillon de chaîne court (2), sollicité par la traction, et un maillon de chaîne long (1), sollicité par la pression, qui sont reliés l'un à l'autre par l'intermédiaire d'articulations de type douille (3), et se chevauchent, moyennant quoi, à une certaine distance A, parallèlement aux articulations de type douille (3), un dispositif tendeur (7, 8, 11) sollicité par la traction est fixé sur les maillons de chaîne longs (1), lequel stabilise la chaîne à articulations (4) sous une certaine charge.

2. Chaîne à articulations (4) selon la revendication 1, **caractérisé en ce que**, des deux côtés, sont prévus deux dispositifs tendeurs (7, 8, 11), qui sont au besoin sollicités de manière alternée.

3. Chaîne à articulations (4) selon au moins l'une quelconque des revendications précédentes, **caractérisée en ce que** la distance (A) entre les articulations de type douille (3) et le dispositif tendeur (7, 8, 11) peut être modifiée, de telle sorte que la disposition des maillons de chaîne (1, 2) peut être ajustée en forme d'arc.

4. Chaîne à articulations (4) selon l'une quelconque des revendications précédentes, **caractérisée en ce que** le dispositif tendeur (11) est constitué d'éléments tendeurs (10) en forme de tige, qui sont articulés sur les maillons de chaîne longs (1).

5. Chaîne à articulation (4) selon la revendication 4, **caractérisée en ce que** les éléments tendeurs (10) en forme de tige, dans la zone de leurs articulations de type douille (12), sont dotés de trous longitudinaux (13) s'étendant dans la direction longitudinale.

6. Chaîne à articulations (4) selon la revendication 5, **caractérisée en ce que** les éléments tendeurs (10) en forme de tige peuvent être réglés en longueur.

7. Chaîne à articulations (47) selon l'une quelconque des revendications précédentes, **caractérisée en ce que** le dispositif tendeur (7, 8) est constitué d'un élément tendeur en forme de bande, continu.

8. Chaîne à articulation (4) selon l'une quelconque des revendications précédentes, **caractérisée en ce que** les maillons de chaîne longs (1) présentent, au niveau de leurs extrémités, des sections pliées en U, dans lesquelles sont disposées les articulations de type douille (3) pour les maillons de chaîne courts (2).
